Europäisches Patentamt

European Patent Office

Office européen des brevets

(11) Veröffentlichungsnummer : **0 038 584**
**B1**

(12) **EUROPÄISCHE PATENTSCHRIFT**

(45) Veröffentlichungstag der Patentschrift :
15.08.84

(51) Int. Cl.³ : **B 23 K 35/02**, B 23 K 35/32,
B 23 K 35/30, B 22 D 11/06,
C 22 C 1/00// C04B37/02

(21) Anmeldenummer : 81200350.7

(22) Anmeldetag : 30.03.81

(54) Mehrschichtiges Lot und Verfahren zu dessen Herstellung.

(30) Priorität : 21.04.80 EP 80200357

(43) Veröffentlichungstag der Anmeldung :
28.10.81 Patentblatt 81/43

(45) Bekanntmachung des Hinweises auf die Patenterteilung : 15.08.84 Patentblatt 84/33

(84) Benannte Vertragsstaaten :
CH DE FR GB IT LI NL SE

(56) Entgegenhaltungen :
DE-B- 1 043 918
FR-A- 2 301 605
US-A- 1 756 568
US-A- 3 117 003
US-A- 3 856 513
US-A- 4 160 854
US-A- 4 182 628
US-A- 4 250 229
WELDING JOURNAL, Jahrgang 57, Nr. 7, Juli 1978,
MIAMI (US) N. DE CRISTOFARO et al.: "Metglas
Brazing Foil", Seiten 33-38
JOURNAL OF APPLIED PHYSICS, Jahrgang 50, Nr. 7,
Juni 1979, NEW YORK (US) TAKAYAMA et al.: "The
analysis of casting conditions of amorphous alloys",
Seiten 4962-4965
SOLID STATE TECHNOLOGY, Jahrgang 10, Nr. 9,
September 1975, PORT WASHINGTON, N.Y. (US) C.E.
WHITE et al.: "Proforma on Preforms", Seiten 45-48
WELDING JOURNAL, Jahrgang 56, Nr. 8, August
1977, MIAMI (US) D.A. CANONICO et al.: "Direct
Brazing of Ceramics, Graphite and Refractory
Metals", Seiten 31-38
WELDING JOURNAL, Jahrgang 43, Nr. 7, Juli 1964
MIAMI (US), C.W. FOX et al. : « Brazing of Ceramics », Seiten 591-597

(73) Patentinhaber : BBC Aktiengesellschaft Brown,
Boveri & Cie.
Haselstrasse
CH-5401 Baden (CH)

(72) Erfinder : Fischer, Melch, Dr.
Ziergärtlistrasse 2
CH-8953 Dietikon (CH)
Erfinder : Brunner, Kurt
Antoniusstrasse 4
CH-5430 Wettingen (CH)

## Beschreibung

Die Erfindung betrifft ein mehrschichtiges Lot mit einer einen Anteil von mindestens 5 % an sauerstoffaffinen Elementen enthaltenden Folie aus Aktivlot mit mikrokristalliner oder amorpher Struktur.

Die Erfindung betrifft weiterhin ein Verfahren zur Herstellung eines mehrschichtiges Lotes mit einer metallischen Folie mit mikrokristalliner oder amorpher Struktur, bei welchem eine Ausgangslegierung in einem Quarz- oder Borbutridtiegel mittels Induktionsheizung unter Vakuum geschmolzen, durch eine Düse gepresst und auf eine sich unter Vakuum oder Schutzgas befindende rotierende Oberfläche eines Kupferzylinders gespritzt wird, und das auf diese Weise erzeugte Band kontinuierlich vom Umfang des Kupferzylinders abgenommen wird.

Aktivlote werden häufig zur Verbindung von keramischen mit metallischen Bauelementen benutzt. Sie zeichnen sich durch einen gewissen Gehalt an Elementen hoher Sauerstoffaffinität aus, wodurch erst die Voraussetzungen für die Benetzbarkeit der Oberfläche des Keramikkörpers geschaffen werden. Solche Lote sind — bis auf wenige Ausnahmen, z. B. auf der Basis von Ag/Cu/Ti mit verhältnismässig niedrigem Titangehalt — in der Regel sehr spröde und werden im allgemeinen in Pulverform auf die Löstelle aufgebracht (siehe z. B. C. W. Fox and S. M. Slaughter, « Brazing of ceramics », Welding Journal 43, S. 591-597, July 1964 ; D. A. Canonico et. al., « Direct Brazing of ceramics, Graphite and Refractory Metals », Welding Journal 56, S. 31-38, August 1977). Es handelt sich u. a. um Ti/Zr/Be-, Ti/Cu/Be-, Ti/V/Cr-, Ti/ZR/Ta-Legierungen. Es ist ausserdem bekannt, Aktivlote als Draht- und Folienmaterial in Form von Verbundwerkstoffen z. B. als eutektischen Ag/CU-Kern mit Ti-Mantel oder aufeinander gelegtes Halbzeug je aus Ag resp. Zr zu benutzen (siehe H. Bender « High Temperature Metal-Ceramics Seals », Ceramic Age 63, S. 15-50, 46-50, April 1954).

Duktile Lote, z. B. auf der Basis von Ag/Cu/Ti (siehe z. B. DE-B-10 43 918 : Ag/Cu-Mantel mit Ti- oder Zr-Seele) lassen sich zwar Draht- und Bandform verarbeiten, weisen jedoch nur einen geringen Gehalt (wenige Atom-%) an sauerstoffaffinem Element (Titan) auf und sind dank des hohen Silbergehaltes verhältnismässig teuer. Durch den beschränkten Titangehalt ist die Benetzbarkeit der Keramikoberfläche für viele Anwendungsfälle ungenügend, um so mehr als dass sich meistens das reaktive Metall (To, Zr) im Innern des Halbzeugs befindet.

Die oben erwähnten spröden Lote lassen sich hingegen nicht durch thermomechanische Verarbeitung in eine geeignete Form bringen und sind normalerweise nur in Pulverform verfügbar. Sie müssen daher durch Emulgieren und Aufspritzen auf die zu lötenden Oberflächen aufgebracht werden, was eine Reihe von Problemen bezüglich Haftfestigkeit auf der Oberfläche, Oxydationsgefahr in Anbetracht der Kleinheit der Pulverpartikel, Homogenität der Lotschicht etc. mit sich bringt. Es besteht daher ein Bedürfnis nach der Bereitstellung von Aktivlotmaterial in kompakter, insbesondere in Folienform.

Die Schwierigkeiten, die sich bei der üblichen Verarbeitung von pröden Metallen ergeben, können umgangen werden, wenn die Metalle in weitgehend amorpher Form vorliegen.

Zur Herstellung von amorphen Metallen, welche u. a. auch als Lotmaterialien Verwendung finden, ist ein Verfahren entwickelt worden, das unter der Bezeichnung « melt spinning » bekannt ist (siehe N. De Cristafaro and C. Henschel, Metglas Brazing Foil, Welding, Journal, July 1978 ; US-A-4 160 854 ; US-A-4 628 ; FR-A-2 301 605). Dabei wird die Abkühlung einer Metallschmelze so weit getrieben, dass es nicht mehr zur Kristallbildung kommt, sondern die unterkühlte Schmelze quasi als Glass « erstarrt ».

Ein grundsätzliches Problem bei gelöteten Keramik-Metall-Verbindungen sind die beim Abkühlen nach dem Löten entstehenden mechanischen Spannungen an der Grenzfläche Keramik-Metall, bedingt durch die unterschiedlichen thermischen Ausdehnungskoeffizienten der zu verbindenden Komponenten. Dabei kann es zu hohen Zugspannungen in der Keramik kommen, die zu Rissen in derselben führen, weil alle Keramikmaterialien zwar eine hohe Druckfestigkeit, aber nur eine geringe Dehnung bei Zug- und Biegebeanspruchung aufweisen.

Eine Möglichkeit, die mechanischen Spannungen an der Grenzfläche Keramik-Metall klein zu halten, besteht in der Wahl einer günstigen Kontaktfiguration, bei der z. B. eine Zwischenschicht aus höherschmelzendem Metall, beidseitig bedeckt mit einer Lotschicht, verwendet wird (Solid State Technology, Vol. 10 No. 9, Sept. 1975, S. 45-48).

Ein solches Mehrschichtlot mit einem Kern aus Cu oder Ag und einer Beschichtung aus Pb-Sn-Lot ist sehr einfach herzustellen. Schwierigkeiten treten jedoch auf, wenn für die Metall-Keramik-Verbindung Aktivlote mit einem höheren Anteil an sauerstoffaffinen Elementen eingesetzt werden sollen, weil diese Lote sich, wie bereits erwähnt, den üblichen Verarbeitungsmethoden entziehen.

Der Erfindung liegt daher die Aufgabe zugrunde, ein mehrschuchtiges Lot auf der Basis eines duktilen Aktivlotes zu schaffen, das insbesondere auch in Hinsicht auf die thermomechanische Anpassung, für eine Vielzahl von Keramik-Metall-Verbindungen und ohne grosse Einschränkungen bezüglich der Wahl der metallischen Anschlusskomponenten und Anschlusskonfigurationen Anwendung finden kann, sowie ein Verfahren zu dessen Herstellung anzugeben.

Diese Aufgabe wird erfindungsgemäss durch die Merkmale der Ansprüche 1 und 2 gelöst.

Die Erfindung wird anhand des nachfolgenden Ausführungsbeispiels beschrieben.

### Ausführungsbeispiel :

Um ein von Natur aus sprödes Aktivlot in die zu Lötzwecken geeigente Form einer dünnen Folie überzuführen, wurde das « melt spinning »-Verfahren herangezogen und dabei wie folgt vorgegangen : Als Ausgangsmaterial wurde eine Legierung der nachstehenden Zusammensetzung gewählt :

| | |
|---|---|
| Kupfer : | 70 Atom-% |
| Germanium : | 20 Atom-% |
| Titan : | 10 Atom-% |

Die einzelnen Komponenten wurden im angegebenen Verhältnis im Lichtbogenofen erschmolzen. Die Charge wurde mehrere Male umgeschmolzen und erstarren gelassen, um eine möglichst homogene Konzentrationsverteilung über den gesamten Querschnitt zu erzielen. Nach der letzten Erstarrung wurde die Legierung mechanisch auf eine Partikelgrösse von wenigen Millimetern zerkleinert und in ein Quarzrohr von 9 mm Innendurchmesser und 150 mm Länge bis auf eine Höhe von 50 mm abgefüllt. Das Quarzrohr war an seinem unteren Ende flachgequetscht und wies dort eine schlitzartige Oeffnung von 8 mm Breite und 0,25 mm lichter Weite auf. Das obere zylindrische Ende des Quarzrohres wurde über einen Gummischlauch an eine unter Druck stehende Inertgasquelle angeschlossen. Nun wurde das Quarzrohr in die wendelförmige Heizwicklung einer induktiven Heizwicklung gesteckt und gegenüber einem horizontalachsigen Kupferzylinder derart ausgerichtet, dass der Schlitz auf 30° Winkel gegenüber der Vertikalen — entgegen der Drehrichtung des Kupferzylinders gesehen — und einen Abstand von 2 mm von der Zylinderoberfläche zu liegen kam. Der Schlitz verlief parallel zur Achse des Zylinders. Die Achse des Quarzrohres schloss mit der Tangente an den Kupferzylinder einen Winkel von 70° ein (20° gegenüber der Radialen entgegen Drehrichtung gesehen). Der Kupferzylinder hatte einen Aussendurchmesser von 300 mm und eine axiale Breite von 50 mm. Nun wurde das Ganze in eine Vakuumkammer (Durch $< 10^{-3}$ m bar) eingebaut, welche daraufhin mit Stickstoff von 0,8 bar Druck geflutet wurde. Der Kupferzylinder wurde in Rotation versetzt, so dass er eine Umfangsgeschwindigkeit von 30 m/s aufwies. Durch Einschalten der Heizwicklung wurde die Beschickung des Quarzrohres auf eine Giesstemperatur gebracht, die ca. 100 °C oberhalb des Liquiduspunktes lag. Nun wurde durch Oeffnen des Hahns zwischen dem Gummischlauch und der Inertgasquelle ein Druck von ca. 0,7 bar gegenüber dem Kammerdruck auf die im Quarzrohr befindliche Schmelze ausgeübt un letztere in Form eines flachen, bandartigen Strahls durch die Schlitzdüse auf die Oberfläche des rotierenden Kupferzylinders geschleudert. Dadurch wurde das Schmelzgut mit einer Geschwindigkeit von ca. $10^6$ °C/s abgekühlt und erstarrte in Form eines Bandes, welches sich von selbst nach Durchlaufen einer Strecke von ca. 50 mm vom Zylinder abhob und in den umgebenden Raum flog. Das Erzeugnis bestand in einem Band von ca. 8 mm Breite, 70 µ Dicke und ca. 4 m Länge. Die direkt mit dem Kupferzylinder in Berührung gestandene Oberfläche des Bandes wies eine Rauhigkeit von weniger als 1 µ, die frei erstarrte Seite eine solche von ca. 3 µ auf. Die Legierung hatte eine homogene mikrokristalline Struktur mit einem mittleren Kristallitdurchmesser von weniger als 3 µ. Die Oberfläche des Bandes war frei von Oxydationsspuren.

Mit dem Band wurden quadratische, 4 cm² grosse und 0,3 bis 0,5 mm dicke Blechstücke aus sauerstofffreiem Kupfer beidseitig oberflächendeckend belegt und das Ganze durch Punktschweissen zu einem Dreischicht-Körper vereinigt. Das auf diese Weise hergestellte Aktivschichtlot wurde zwischen eine Klotz aus Kohlenstoffstahl und ein Plättchen aus Zirkonoxyd von 4 cm² Fläche und 0,3 cm Dicke geklemmt und mittels eines Belastungskörpers aus Wolfram unter einem Druck von 6 000 Pa gehalten. Zur Durchführung des Lötvorganges wurde das Werkstück samt Vorrichtung in einen Hochvakuumlötofen von $10^{-4}$ Torr gebracht und unter diesem Vakuum im Verlaufe von 30 min auf eine Temperatur von 985 °C erhitzt. Diese Temperatur wurde während 5 min unter Vakuum gehalten. Statt Hochvakuum kann auch Wasserstoffatmosphäre unter $10^{-3}$ Torr angewendet werden. Die Abkühlung auf Raumtemperatur erfolgte innerhalb von 60 min.

Das fertig gelötete Keramik/Metall-Werkstück wurde zur Prüfung der Festigkeit mehrere Male auf 600 °C erhitzt und in Wasser abgeschreckt. Es erwies sich als vollständig thermoschockunempfindlich, indem keinerlei Risse festgestellt werden konnten. Die Scherfestigkeit der Verbindung betrug in allen Fällen über 100 MPa.

Der als Träger für die Aktivlotfolien dienende duktile flächenförmige Metallkörper kann die Form eines Bleches oder Bandes von 0,3 bis 1 mm Dicke aufweisen. Ausser Kupfer kommen dafür noch Kupferlegierungen, insbesondere Kupfer/Beryllium und Kupfer/Nickel in Frage. Ferner können zu diesem Zweck auch Tantal, Zirkon, Niob, Molybdän, Aluminium und Aluminiumlegierungen verwendet werden. Das Meterial hängt von der Natur der zu verbindenden Werkstücke, dem Verwendungszweck und Einsatzbereich (Temperatur, Atmosphäre etc.) ab.

Auf diese Weise lassen sich nicht nur Stahl und Zirkonoxydkeramik miteinander verbinden. Auf der Seite der keramischen Stoffe bieten sich insbesondere auch Aluminiumoxyd, Saphir, Aluminiumoxyd/Titankarbid-Mischungen, Vanadiumsesquioxyd, Siliziumkarbid, Siliziumnitrid, etc. . Auf der Metallseite stehen ausser dem Kupfer und Kupferlegierungen, Tantal, Niob, Molybdän, Wolfram, Wolfram-Kupferlegierungen und zahlreiche andere Legierungen. Das Feld der Verwendung derartiger mit dem erfindungsgemässen Aktivlot hergestellten Verbunkörper erstreckt sich über weite Gebiete des Maschinenbaus und der Elektrotechnik.

Zur Herstellung der Folie aus einem Aktivlot kann statt eines Quarzrohres auch ein solches aus Bornitrid verwendet werden.

0 038 584

Das Quarz- oder Bornitridrohr kann selbstverständlich zum Zweck der Massenproduktion an seinem oberen Ende auch zum Tiegel erweitert sein. Die Schlitzdüse kann eine lichte weite von 100 bis 400 μ haben. Der Kupferzylinder kann mit einer Umfangsgeschwindigkeit von 20 bis 60 m/s rotieren. Die Kammer kann entweder unter Vakuum oder Schutzgas gehalten werden.

Nach dem vorliegenden Verfahren können folgende Legierungen, welche sonst unter normalen Verhältnissen eine spröde, zu weiterer Verarbeitung ungeeignete Gusstruktur aufweisen, in Folienform mit amorpher oder mikrokristalliner Struktur mit einer Korngrösse von weniger als 3 μ und 30 bis 100 μ Dicke bei 2 bis 30 mm Breite übergeführt werden :

— Binäre und ternäre Kupferlegierungen mit mindestens 40 Atoms-% Kupfer,
— Binäre Kupfer/Titan-Legierungen mit 40 bis 85 Atom-% Kupfer, Rest Titan,
— Insbesondere die binäre Kupfer/Titan-Legierung mit 70 Atom-% Kupfer und 30 Atom-% Titan,
— Kupfer/Titan-Germanium-Legierungen mit

40 bis 85 Atom-% Kupfer
5 bis 60 Atom-% Titan
0 bis 55 Atom-% Germanium,

— Zirkon/Aluminium/Silizium-Legierungen mit

60 bis 90 Atom-% Zirkon
10 bis 40 Atom-% Aluminium
0 bis 30 Atom-% Germanium,

— Zirkon/Aluminium/Germanium-Legierungen mit

60 bis 90 Atom-% Zirkon
10 bis 40 Atom-% Aluminium
0 bis 30 Atom-% Germanium,

— Zirkon/Eisen/Silizium-Legierungen mit

60 bis 90 Atom-% Zirkon
10 bis 40 Atom-% Eisen
0 bis 30 Atom-% Silizium,

— Zirkon/Eisen/Germanium-Legierungen mit

60 bis 90 Atom-% Zirkon
10 bis 40 Atom-% Eisen
0 bis 30 Atom-% Germanium,

— Zirkon/Nickel/Silizium-Legierungen mit

60 bis 90 Atom-% Zirkon
10 bis 40 Atom-% Nickel
0 bis 30 Atom-% Silizium,

— Zirkon/Nickel/Germanium-Legierungen mit

60 bis 90 Atom-% Zirkon
10 bis 40 Atom-% Nickel
0 bis 30 Atom-% Germanium.

Grundsätzlich kann bei allen silizium- oder germaniumhaltigen Legierungen das Silizium bzw. das Germanium teilweise oder ganz durch das jeweils andere Element ersetzt sein.
— insbesondere die ternäre Kupfer/Titan/Germanium-Legierung mit

70 Atom-% Kupfer
10 Atom-% Titan
20 Atom-% Germanium,

— Kupfer/Titan/Silizium-Legierungen mit

40 bis 85 Atom-% Kupfer
5 bis 60 Atom-% Titan
0 bis 55 Atom-% Silizium,

— Kupfer/Zirkon/Silizium-Legierungen mit

30 bis 80 Atom-% Kupfer
10 bis 70 Atom-% Zirkon
0 bis 40 Atom-% Silizium,

— Kupfer/Zirkon/Germanium-Legierungen mit

30 bis 80 Atom-% Kupfer
10 bis 70 Atom-% Zirkon
0 bis 40 Atom-% Germanium,

— Nickel/Titan/Silizium-Legierungen mit

5 bis 40 Atom-% Nickel
60 bis 90 Atom-% Titan
0 bis 30 Atom-% Silizium,

— Nickel/Titan/Germanium-Legierungen mit

5 bis 40 Atom-% Nickel
60 bis 90 Atom-%Titan
0 bis 30 Atom-% Germanium.

Durch die erfindungsgemässen Aktivschichtlote mit Trägermetall in Folienform mit mikrokristalliner bis amorpher Struktur wurden Werkstofformen geschaffen, welche sich dank ihres hohen Gehaltes an sauerstoffaffinen Elementen besonders für Lötverbindungen zwischen Keramik- und Metallteilen eignen. Derartige Verbindungen können ganz allgemein im Maschinenbau und in der Elektrotechnik, insbesondere in der Halbleiter- und Hochvakuumtechnik Verwendung finden und zeichnen sich durch besonders hohe Thermoschockunempfindlichkeit und Stromtragfähigkeit bei extrem raschem Temperaturwechsel aus.

## Ansprüche

1. Mehrschichtiges Lot mit einen einen Anteil von mindestens 5 % an sauerstoffaffinen Elementen enthaltenden Folie aus Aktivlot mit mikrokristalliner oder amorpher Struktur, wobei das Lot einen duktilen, schichtartigen Metallkörper mit auf beiden Seiten aufgebrachten Folien aus Aktivlot umfasst, der Metallkörper in Form eines Bandes oder Bleches von 0,3 bis 1 mm Dicke aus Kupfer, einer Kupferlegierung, einer Kupfer-Berylliumlegierung, einer Kupfer-Nickellegierung, Tantal, Zirkon, Niob, Molybdän, Aluminium oder einer Aluminiumlegierung vorliegt, und die auf beiden Seiten des Metallkörpers aufgebrachten Folien mittels Punktschweissung befestigt sind.

2. Verfahren zur Herstellung eines mehrschichtigen Lotes mit einer metallischen Folie mit mikrokristalliner oder amorpher Struktur, bei welchem eine Ausgangslegierung in einem Quarz- oder Bornitridtiegel mittels Induktionsheizung unter Vakuum geschmolzen, durch eine Düse gepresst und auf eine sich unter Vakuum oder Schutzgas befindende rotierende Oberfläche eines Kupferzylinders gespritzt wird, und das auf diese Weise erzeugte Band kontinuierlich vom Umfang des Kupferzylinders abgenommen wird, wobei die Legierung ein einen Anteil von mindestens 5 % an sauerstoffaffinen Elementen enthaltendes Aktivlot ist, die Legierung mit einer Geschwindigkeit von 1 bis 60 m/sec durch eine Schlitzdüse von 100 bis 400 μm Schlitzweite gepresst und unter einem Winkel von 20° gegenüber der Radialen auf die mit einer Umfangsgeschwindigkeit von 20 bis 60 m/s rotierenden Oberfläche des Kupferzylinders gespritzt wird, und das vom Kupferzylinder abgenommene folienförmige Band durch Punktschweissen beidseitig auf einen schichtartigen duktilen Metallkörper aufgebracht wird.

## Claims

1. Multi-layer solder with a foil, containing a proportion of at least 5 % of elements having an affinity for oxygen, of active solder having a microcrystalline or amorphous structure, wherein the solder comprises a ductile, layer-type metal body with active solder foils applied to both sides, the metal body has the shape of a 0.3 to 1 mm thick band or sheet of copper, a copper alloy, a copper beryllium alloy, a copper/nickel alloy, tantalum, zirconium, niobium, molybdenum, aluminium or an aluminium alloy, and the foils applied to both sides of the metal body are fixed by means of spot-welding.

2. Process for the manufacture of a multi-layer solder with a metallic foil of microcrystalline or amorphous structure, wherein a starting alloy is fused in vacuo in a quartz or boron nitride crucible by means of inductive heating, is forced through a die and sprayed on to a rotating surface, which is under a vacuum or blanket gas, of a copper cylinder, and the band produced in this way is continuously taken off from the periphery of the copper cylinder, the alloy being an active solder which contains a proportion of at least 5 % of elements having an affinity for oxygen, the alloy being forced at a speed of 1 to 60 m/second through a slot die of 100 to 400 μm slot width and being sprayed under an angle of 20° relative to the radial on to the surface, rotating at a peripheral speed of 20 to 60 m/second, of the copper cylinder and the foil-shaped band, taken off from the copper cylinder, being applied by spot-welding to both sides of a layer-type ductile metal body.

**Revendications**

1. Soudure à plusieurs couches comportant une feuille de soudure active à structure microcristalline ou amorphe contenant une quantité d'au moins 5 % d'éléments ayant une affinité vis-à-vis de l'oxygène, cette soudure comportant un corps métallique ductile sous forme d'une couche sur les deux faces duquel sont appliquées des feuilles de soudure active, le corps métallique se présentant sous forme d'une bande ou d'une tôle d'une épaisseur de 0,3 à 1 mm en cuivre, en un alliage de cuivre, en un alliage de cuivre/béryllium, en un alliage de cuivre/nickel, en tantale, en zirconium, en niobium, en molybdène, en aluminium ou en un alliage d'aluminium, tandis que les feuilles appliquées sur les deux faces du corps métallique sont fixées moyennant un soudage par points.

2. Procédé de fabrication d'une soudure à plusieurs couches comportant une feuille métallique à structure microcristalline ou amorphe, procédé dans lequel on fait fondre un alliage de départ sous vide dans un creuset en quartz ou en nitrure de bore moyennant un chauffage par induction, on le presse à travers une buse et on le pulvérise sur une surface rotative d'un cylindre en cuivre se trouvant sous vide ou sous une atmosphère d'un gaz protecteur et l'on enlève continuellement la bande ainsi formée de la périphérie du cylindre en cuivre, l'alliage étant une soudure active contenant une quantité d'au moins 5 % d'éléments ayant une affinité vis-à-vis de l'oxygène, l'alliage étant pressé à une vitesse de 1 à 60 m/s à travers une buse à fente d'une largeur intérieure de 100 à 400 μm, tandis qu'il est pulvérisé sous un angle de 20° par rapport au sens radial, sur la surface du cylindre en cuivre tournant à une vitesse périphérique de 20 à 60 m/s, tandis que la bande qui est sous forme d'une feuille et qui est enlevée du cylindre en cuivre est appliquée, par soudage par points, sur les deux faces d'un corps métallique ductile en forme de couche.